(19) Europäisches Patentamt
European Patent Office
Office européen des brevets

(11) **EP 2 278 304 A1**

(12) **EUROPÄISCHE PATENTANMELDUNG**

(43) Veröffentlichungstag:
**26.01.2011 Patentblatt 2011/04**

(51) Int Cl.:
*G01N 21/89* (2006.01)  *G01B 11/30* (2006.01)
*G01N 21/896* (2006.01)

(21) Anmeldenummer: **10187717.3**

(22) Anmeldetag: **11.02.2004**

(84) Benannte Vertragsstaaten:
**AT BE BG CH CY CZ DE DK EE ES FI FR GB GR HU IE IT LI LU MC NL PT RO SE SI SK TR**

(30) Priorität: **04.04.2003 DE 10316707**

(62) Dokumentnummer(n) der früheren Anmeldung(en) nach Art. 76 EPÜ:
**04003014.0 / 1 477 793**

(27) Früher eingereichte Anmeldung:
**11.02.2004 EP 04003014**

(71) Anmelder:
- **Schott AG**
  **55122 Mainz (DE)**
- **ISRA VISION LASOR GmbH**
  **33813 Oerlinghausen (DE)**

(72) Erfinder:
- **Gerstner, Dr. Klaus**
  **65474 Bischofsheim (DE)**
- **Ottermann, Dr. Clemens**
  **65795 Hattersheim (DE)**
- **Zimmermann, Thomas**
  **33758 Schloß Holte Stukenbrock (DE)**
- **Droste, Josef**
  **49219 Glandorf (DE)**

(74) Vertreter: **Fuchs**
**Patentanwälte**
**Söhnleinstraße 8**
**65201 Wiesbaden (DE)**

Bemerkungen:
Diese Anmeldung ist am 15-10-2010 als Teilanmeldung zu der unter INID-Code 62 erwähnten Anmeldung eingereicht worden.

(54) **Vorrichtung zur Erkennung von Fehlern in transparentem Material**

(57) Die Erfindung betrifft eine Vorrichtung zur Erkennung von Fehlern in transparentem Material, mit einer ersten Strahlungsquelle (1) zur Beleuchtung eines definierten Teilvolumens (2) des transparenten Materials (3), mit einem Detektor (4) zur Erfassung des vom besagten Teilvolumens (2) herrührenden Lichts, und mit einer zweiten Strahlungsquelle (5), die derart zum Material (3) angeordnet ist, dass im besagten Teilvolumen (2) der zugehörige Lichtweg ausschließlich im Inneren des Materials (3) verläuft, wobei die erste Strahlungsquelle (1) aus zwei Teilen besteht, die mit unterschiedlicher Intensität oder Wellenlänge emittieren können.

Fig. 2

EP 2 278 304 A1

## Beschreibung

Die Erfindung betrifft ein Verfahren und eine Vorrichtung zur Erkennung von Fehlern in transparentem Material nach den Oberbegriffen der unabhängigen Ansprüche. Die Erfindung dient der Bestimmung der optischen Qualität und der Detektion von Fehlern in transparentem Material, und zwar festem Material wie insbesondere Glas oder Kunststoffen, wie beispielsweise Polyvinylchlorid (PVC), Polypropylen (PP), Polyethylen (PE) oder andere transparente Duroplaste, Elastomere oder Thermoplaste. Besonders bevorzugt wird die Anwendung dieser Erfindung für die Qualitätsuntersuchung von Flachglas und Float-Glas.

Die WO 99/49303 beschreibt ein Verfahren und eine Vorrichtung zur Detektion von Fehlern in Flachglas. Hierbei betrachtet eine Kamera einen Fleck auf der Grenze einer zweigeteilten Beleuchtungsvorrichtung. Die Zweiteilung wird dadurch realisiert, dass in der einen Hälfte der Beleuchtungsvorrichtung rote LED's vorgesehen sind, und in der anderen Hälfte grüne LED's. Zwischen der Beleuchtungsvorrichtung und der Kamera befindet sich relativbewegtes Flachglas. Befindet sich im Flachglas ein strahlablenkender Fehler, wie beispielsweise eine hinreichend große Blase, so lenkt dieser Fehler die von der Beleuchtungseinrichtung zur Kamera führenden Strahlen ab. Hierdurch gelangt eine veränderte Menge an rotem bzw. grünen Licht in die wellenlängenempfindliche Kamera, so dass ein Ablenkungssignal erzeugt wird. Auf diese Weise kann die Vorrichtung strahlablenkende Fehler detektieren. Weiterhin wird auch das Hellfeldsignal benutzt, um die Größe des entsprechenden strahlablenkenden Fehlers zu vermessen.

Die japanische Patentveröffentlichung H 10-339795 lehrt die Detektion von Fehlern in Flachglas dadurch, dass parallele Lichtstrahlen schräg zur Seitenkante des Flachglases eingekoppelt werden. Durch diese Art der Einkopplung kommt es im Inneren des bandförmigen Glasmaterials zur einer Totalreflexion, so dass das Licht von der einen Seite des Flachglases zur anderen wandert. Befindet sich im Inneren des Flachglases ein Glasfehler, wie beispielsweise ein Einschluss, ein Knoten oder eine Blase, so wird das in das Volumen eingekoppelte Licht gestreut. Das Streulicht wird von einem Detektor erfasst.

Die DE 102 21 945.1 vom 15.05.2002 offenbart ein hierzu ähnliches Verfahren, bei dem ein Laserstrahl seitlich in ein Flachglas eingekoppelt wird, und wobei das Laserlicht im Inneren infolge Totalreflektion zur anderen Seite des Flachglasbandes wandert. Hierbei wird der Laserstrahl an der Seitenkante des Flachglases über Wasser in das Glas eingekoppelt. Hierdurch wird der Nachteil überwunden, dass bei Float-Glas keine definierte Kantengeometrie vorhanden ist, und es im Unterschied zur vorgenannten japanischen Patentanmeldung nur schwer fällt, auf definierte Art und Weise seitlich zur Seitenkante Strahlung einzukoppeln.

Der Erfindung liegt das technische Problem zugrunde ein Verfahren zur Erkennung von Fehlern in transparentem Material derart weiterzubilden, dass nur Signale aus dem Volumen für die Fehlererkennung und Größenbestimmung herangezogen werden.

Die Lösung dieses technischen Problems erfolgt durch die Merkmale der unabhängigen Ansprüche. Vorteilhafte Weiterbildungen werden durch die abhängigen Ansprüche angegeben.

Der ersten Lösungsvariante liegt die Erkenntnis zugrunde, dass die bisherigen Beschränkungen in der Brauchbarkeit des Hellfeldverfahrens zur Erkennung von Fehlern- in transparenten Materialien ihre Ursache darin haben, dass mit dieser Messmethode keine räumliche Separation der Fehler vorgenommen werden kann. So konnte bislang nicht unterschieden werden, ob das jeweilige Hellfeldsignal, welches im Rahmen dieser Anmeldung definiert sein möge als das Signal, dessen Stärke proportional zur (lokalen) Abnahme der Intensität im Hellfeld infolge Absorption ist, seine Ursache in einem Fehler hat, welcher im Volumen oder aber auf der Oberfläche hat. Die Absorption im Hellfeld kann insofern durch Fehler innerhalb des Glases verursacht werden oder aber auch durch Fehler, wie insbesondere Schmutz, welcher auf der Oberfläche des Glases ist. Diese beiden Fälle konnten bislang nicht unterschieden werden.

Auf dieser Erkenntnis aufbauend, besteht die erfinderische Idee darin, dass Hellfeldverfahren mit einem zweiten Verfahren zu kombinieren, welches prinzipbedingt nur auf Fehler im Volumen sensitiv sein kann. Hierbei wird Sorge getragen, dass von beiden Verfahren nur dasselbe Teilvolumen des transparenten Materials untersucht wird, so dass sichergestellt ist, dass beide Verfahren denselben Fehler detektieren können. Durch Kombination der beiden Verfahren ist es möglich, auf Koinzidenz von Hellfeldsignal und einem Signal des zweiten Verfahrens zu prüfen und im Koinzidenzfall aussagen zu können, dass die Ursache des Hellfeldsignales im Inneren des Materials befindlich ist. Ohne Koinzidenz befindet sich der Fehler nicht im Volumen, sondern auf der Oberfläche, und es handelt sich in den meisten Fällen um Schmutzeffekte.

Basierend auf obigen Überlegungen besteht die verfahrensseitige Lösung des oben genannten technischen Problems in einem Verfahren zur Erkennung von Fehlern in transparentem Material, bei dem mit einer ersten Strahlungsquelle ein definiertes Teilvolumen des Materials einer Hellfeldbeleuchtung unterzogen wird, und das dadurch gekennzeichnet ist, dass mit einer zweiten Strahlungsquelle derart Licht in das Material eingekoppelt wird, dass der Lichtweg im besagten Teilvolumen ausschließlich im Inneren des Materials verläuft, und bei dem ein Fehler im Teilvolumen dadurch erkannt wird, dass die vom Fehler hervorgerufene Absorption im Hellfeld und vom Fehler gestreutes Licht der zweiten Strahlungsquelle detektiert wird. Das vom Streulicht verursachte Signal soll hierbei nachfolgend als Streulichtsignal bezeichnet werden.

Der zweiten Lösungsvariante liegt die Erkenntnis zugrunde, dass strahlablenkende Verfahren zur Erfassung von Fehlern in transparentem Material, also Verfahren, bei denen das transparente Material von außen bestrahlt wird und die Fehler das beaufschlagende Licht ablenken, ebenfalls nicht differenzieren können ob die Strahlablenkung ihre Ursache auf der Materialoberfläche oder im Materialinneren haben.

Bezugnehmend auf die Ausführungen des vorvorletzten Absatzes besteht insofern eine weitere erfinderische Idee darin, ein Strahlablenkungsverfahren mit einem zweiten Verfahren zu kombinieren, das ausschließlich auf Fehler im Materialinneren oder mit anderen Worten im Volumen anspricht.

Basierend auf diese weitere erfinderische Idee, besteht die verfahrensseitige Lösung in einem Verfahren zur Erkennung von Fehlern in transparentem Material, bei dem mit einer ersten Strahlungsquelle ein definiertes Teilvolumen des Materials bestrahlt wird, und bei dem mit einer zweiten Strahlungsquelle derart Licht in das Material eingekoppelt wird, dass der Lichtweg im besagten Teilvolumen ausschließlich im Inneren des Materials verläuft, und bei dem ein Fehler im Teilvolumen dadurch erkannt wird, dass sowohl vom Fehler gestreutes Licht als auch die vom Fehler hervorgerufene Ablenkung des Lichts der ersten Strahlungsquelle detektiert wird.

Das vom abgelenkten Licht verursachte Signal im Strahlungsdetektor werde nachfolgend als Ablenkungssignal bezeichnet.

Die beiden oben genannten Verfahren können alternativ oder kumulativ betrieben werden. Zusätzlich ist es in einer dritten Lösungsvariante möglich, das vom Fehler gestreute Licht und die vom Fehler im Teilvolumen hervorgerufene Ablenkung des Lichts der ersten Strahlungsquelle zu erfassen, womit auf strahlablenkende Fehler im Materialinneren untersucht werden.

Zusammenfassend besteht damit die Lösung des o. g. technischen Problems in einem Verfahren zur Erkennung von Fehlern in transparentem Material, bei dem mit einer ersten Strahlungsquelle ein definiertes Teilvolumen des Materials bestrahlt wird, und bei dem mit einer zweiten Strahlungsquelle derart Licht in das Material eingekoppelt wird, dass der Lichtweg im besagten Teilvolumen ausschließlich im Inneren des Materials verläuft und bei dem ein Fehler im Teilvolumen dadurch erkannt wird, dass

    a) sowohl vom Fehler gestreutes Licht, als auch
    b) die vom Fehler hervorgerufene Absorption im Hellfeld, und/oder
    c) die vom Fehler hervorgerufene Ablenkung des Lichts der ersten Strahlungsquelle

detektiert wird.

Die das technische Problem lösende Vorrichtung ist eine Vorrichtung zur Erkennung von Fehlern in transparentem Material, mit einer ersten Strahlungsquelle zur Beleuchtung eines definierten bzw. vorgegebenen Teilvolumens des transparenten Materials, mit einem Detektor zur Erfassung des vom besagten Teilvolumens herrührende Lichts, und mit einer zweiten Strahlungsquelle, die derart zum Material angeordnet ist, dass im besagten Teilvolumen der zugehörige Lichtweg ausschließlich im Inneren des Materials verläuft.

Unter Bezugnahme auf die Ausführungen zur verfahrensseitigen Lösung kann das vom vorgegebenen Teilvolumen herrührende Licht

    a) das vom Fehler gestreute Licht der zweiten Strahlungsquelle sein, und /oder
    b) die vom Fehler hervorgerufene Absorption im Hellfeld sein, wobei das absorbierte Licht solches der ersten Strahlungsquelle ist, und/oder
    c) solches der ersten Strahlungsquelle sein, welches vom Fehler abgelenkt wurde.

Dem an Fehlern im Material gestreuten Licht der zweiten Strahlungsquelle ist ein Detektor zugeordnet. Dieser kann identisch mit dem Detektor sein, der das Licht der ersten Strahlungsquelle erfasst, oder von ihm verschieden sein.

Es ist vorgesehen, dass das Hellfeld ortsaufgelöst vermessen wird. In diesem Fall lässt sich die Größe des im Volumen befindlichen Fehlers ermitteln. Dies ist in der Qualitätskontrolle in der Glasfertigung von großer Bedeutung, denn dabei geht es zunehmend darum, nur noch kleine Defekte für hochwertige Produkte zuzulassen. So ist es beispielsweise bei der Herstellung von TFT-Glas, welches für Flachbildschirme Verwendung findet, zunehmend erforderlich, Defekte mit einem Durchmesser von größer als 50 $\mu$m auszuschließen. In der Fertigung besteht insofern die Spezifikation, dass nur noch eine gewisse definierte Anzahl von Fehlern mit einem Fehlerdurchmesser größer 50 $\mu$m zugelassen werden können. Über die Zahl der Koinzidenzsignale kann insofern geschlossen werden, ob das hergestellte Produkt diesen Anforderungen genügt.

Zur Bestimmung des Fehlertyps ist es möglich, das Verhältnis von Hellfeldsignal zu Streulichtsignal heranzuziehen. Wird durch das erfindungsgemäße Verfahren beispielsweise eine Blase im Volumen beleuchtet, so kommt es zur Lichtstreuung im strahlaustrittsseitigen Teil der Blase. Bei einem Einschluss hingegen, kommt es nur zu einer Streuung auf einer Seite des Einschlusses, und es wird auch insgesamt bei gleicher Fehlergröße weniger Streulicht erzeugt. Insofern kann über das besagte Signalverhältnis differenziert werden, ob es sich um einen Einschluss oder eine Blase handelt. Auch das Verhältnis von Ablenksignal zu Streulichtsignal kann in diesem Sinne zur Bestimmung des Fehlertyps herangezogen werden. Unter Berücksichtigung weiterer im transparenten Material befindlicher Fehler lässt sich dieses verallgemeinern. Bei weiteren Untersuchungen der Erfinder zeigte es sich, dass jeder Fehlertyp über eine eigencharakteristische dreidimensionale Strahlungscharakteristik verfügt, so dass weiterführend über diese Strahlungscharakteristik eine Typisierung der erfassten Fehler vorgenommen werden kann.

Es ist günstig, wenn die zweite Strahlungsquelle monochromatisches Licht emittiert, also ein Laser ist. In diesem Fall kann besonders leicht Licht über die Seitenkante in ein bandförmiges Flachglas eingekoppelt werden. Weiterhin hat dies den Vorteil, dass eine hohe Lichtintensität zur Verfügung steht. Bei einem Flachglas, welches beispielsweise mit einer Halogenlampe beleuchtet würde, wäre damit zu rechnen, dass die Intensität des eingekoppelten Lichts infolge Absorption zur Mitte des Bandes hin stark abnimmt, bei einem 1,2 m Breitband, beispielsweise auf 5 % des im Rand eingekoppelten Wertes, so dass bei einer Auswertung eine aufwändige rechnerische Kompensation erforderlich ist, will man aus dem detektierten Streulicht die Größe der Fehlstellen über die gesamte Breite des Bandes richtig beurteilen. Ein Laser hat jedoch das Potential, dass beim erfindungsgemäßen Verfahren noch genügend Intensität nach einer entsprechend zurückgelegten Wegstrecke des Lichts vorliegt.

Eine vorteilhafte Verwendung des Verfahrens stellt sich ein, wenn die jeweilige Strahlung in bandförmiges Flachglas eingekoppelt wird, und dieses entsprechend auf Fehler untersucht wird. Dieses Flachglas ist produktionsbedingt relativ zu den Strahlungsquellen bewegt, und zwar mit Vorschubgeschwindigkeiten von 10 m/Min., so dass pro Minute aufgrund der Plattenbreite etwa 26 m$^2$ untersucht werden können. Die Dicke derartiger Gläser liegt typischerweise zwischen 0,4 -1,1 mm.

Wenn die zweite Strahlungsquelle im grünen Wellenlängenbereich bzw. grünes Licht emittiert, fällt die Absorption bei technischen Gläsern besonders gering aus, denn diese haben eisenhaltige Verunreinigungen mit einem Absorptionsminimum in besagtem grünen Wellenlängenbereich. Demgemäß ist es vorteilhaft, wenn die Emissionsfrequenz eines eventuell gewählten Lasers 532 nm ist.

Wenn die zweite Strahlungsquelle rotes Licht emittiert, stellt sich eine besonders geringe Absorption bei optischen Gläsern ein. Für diese Fälle bietet sich ein Helium-Neon-Laser oder im roten Wellenlängenbereich emittierende LED's oder Diodenlaser als Strahlungsquellen an. Verallgemeinernd ist es günstig, die Wellenlänge so zu wählen, dass sie vom Material möglichst wenig absorbiert wird.

In Experimenten hat es sich als vorteilhaft erwiesen, wenn die Intensität des von der zweiten Strahlungsquelle eingekoppelten Lichts am Materialrand etwa 10-mal so hoch ist, wie in der Mitte. So wurde bei Experimenten mit in Flachglas eingekoppelten Licht festgestellt, dass es bei der unweigerlich stattfindenden Absorption im Glas keine Lösung ist, die Schwächung des Lichtes auf einfache Weise durch Steigerung der eingekoppelten Intensität zu kompensieren. Vielmehr kam es vermehrt zu Störsignalen, welche vermutlicherweise ihre Ursache in Schmutz auf der Glasoberfläche hatten. Insofern "leuchtete" der Schmutz auf der Oberfläche und führte zu Schwierigkeiten bei der Signalverarbeitung. Insofern stellt das genannte Intensitätsverhältnis eine gute Balance dar zwischen einer hinreichend hohen Intensität einerseits und hinreichend geringen Störsignalen andererseits. Um dieses Intensitätsverhältnis einzustellen, kann die Wellenlänge auf das jeweilige Material abgestimmt werden, da die Absorption mit unterschiedlichen Wellenlängen materialabhängig Änderungen erfährt. Alternativ oder kumulativ kann das Intensitätsverhältnis auch durch eine geänderte Fokussierung des eingekoppelten Laserlichtes vorgenommen werden.

Um zu gewährleisten, dass das Licht der zweiten Strahlungsquelle im zu untersuchenden Teilvolumen ausschließlich im Inneren des Materials verläuft, kann das Licht der zweiten Strahlungsquelle derart eingekoppelt werden, dass es im Inneren totalreflektiert wird. Dies kann dadurch erfolgen, dass das Licht schräg zur Ober- oder Unterseite des Materials eingekoppelt wird, und zwar so, dass beim anschließenden Übergang des Lichts vom transparenten Material zur Luft der Einstrahlwinkel gegenüber der Oberflächenormale größer als der Grenzwinkel der Totalreflexion ist. Alternativ kann das Licht der zweiten Strahlungsquelle auch schräg zur Seitenkante des Materials eingekoppelt werden. Diese Vorgehensweise eignet sich insbesondere bei der Untersuchung von Flachglas oder Float-Glas, wobei das Licht sozusagen im Inneren gefangen wird, wie in einer Lichtleitfaser. Gleichzeitig kann damit nicht nur ein kleines Teilvolumen untersucht werden, sondern es kann über die gesamte Breite des Flachglases auf Fehler hin untersucht werden. Entsprechend muss die zugehörige Vorrichtung so geartet sein, dass sie nicht nur ein kleines Teilvolumen abtastet, sondern eine Vielzahl von Teilvolumina schräg zur Vorschubrichtung des Flachglases.

Wenn Float-Glas mit dem erfindungsgemäßen Verfahren auf Fehler hin untersucht werden soll, stellt dieses Float-Glas an seiner Berandung keine definierte Kantengeometrie bereit, die man nutzen kann, um schräg zur Seitenkante Licht der zweiten Strahlungsquelle einzukoppeln. Insofern ist es günstig, wenn zwischen der zweiten Strahlungsquelle und dem Float-Glas eine transparente Flüssigkeit angeordnet ist, so dass das Licht der zweiten Strahlungsquelle über eine transparente Flüssigkeit, wie beispielsweise Wasser, in das Band eingekoppelt wird. Durch die transparente Flüssigkeit, welche im Kontakt mit der unregelmäßigen Berandung steht, werden Geometrieunterschiede kompensiert und gelingt die Einkopplung des Laserlichts zuverlässig.

Wenn beide Strahlungsquellen gepulstes Licht emittieren, wobei die eine Strahlungsquelle ausschließlich in den Pulspausen der anderen Strahlungsquellen emittiert, kann ein einziger Detektor für die Detektion der Fehler im transparenten Material eingesetzt werden. So wird über die Strahlung der ersten Strahlungsquelle das Hellfeld erfasst, zeitlich versetzt auf entsprechende Streulichtsignale detektiert, und dies alternierend. Da andererseits auf Koinzidenz der beiden Signale getestet wird, versteht es sich von selbst, dass die Vorschubgeschwindigkeit des Materials an die entsprechende Pulsdauer der Strahlungsquellen angepasst werden muss, um zu gewährleisten, dass beide Strahlungsquellen das gleiche Teilvolumen durchleuchten. Entsprechend ist eine die beiden Strahlungsquellen steuernde Elektronik vorgesehen, in der Regel eine Multiplexing-Einheit, die derart ausgebildet ist, dass die Strahlungsquellen ausschließlich zeitversetzt emittieren.

Prinzipbedingt vermag das vorgeschlagene Verfahren nur dann eine Koinzidenz anzuzeigen, wenn im Hellfeld eine Strahlungsabsorption festgestellt wird. Fällt diese Absorption zu gering aus oder ist sie gar nicht vorhanden, so kann dieser entsprechende Fehler nicht gefunden werden. In solchen Fällen ist es jedoch gegebenenfalls möglich, diesen Fehler dadurch zu detektieren, dass man auf die vom ihm hervorgerufene strahlablenkende Wirkung bei Beleuchtung testet. Wird eine Hellfeldbeleuchtung in Transmission vorgenommen, d. h. befindet sich das transparente Medium zwischen Kamera und Beleuchtungsvorrichtung, so wird bei einem strahlablenkenden Fehler das ihn beaufschlagende Licht abgelenkt und gelangt an einer anderen Stelle auf einen Detektor als ohne diesen strahlablenkenden Effekt.

Um eine derartige Strahlablenkung zu erfassen kann die erste Strahlungsquelle zweigeteilt ausgebildet sein und Licht mit zwei unterschiedlichen Intensitäten oder Farben emittieren. Werden beispielsweise zwei Farben emittiert, z. B. rot und grün, so führt die strahlabhängige Wirkung des Fehlers dazu, dass nun eine geänderte Menge an rotem bzw. grünem Licht in den Detektor fällt. Wird nun jeder Lichtfarbe ein Spannungssignal $U_1$ bzw. $U_2$ am Detektor zugeordnet, so kommt es entsprechend bei einer Strahlablenkung zu einer Veränderung dieser Spannungen $U_1$ bzw. $U_2$. Als Maß für die Ablenkung kann die Differenz der beiden Spannungen herangezogen werden.

Alternativ hierzu kann man das Verhältnis

$$U_{pos} = \frac{U_1 - U_2}{U_1 + U_2}$$

heranziehen. Die Amplitude von $U_{pos}$ ist dann ein Maß für die Stärke der Ablenkung eines Fehlers.

Durch die zusätzliche Erfassung strahlablenkender Fehler, werden somit insgesamt mehr Typen von Fehlern messtechnisch erfasst und steigert sich die Sicherheit bei der Erfassung von Fehlern mit einer Maximalgröße, die im Fertigungsprozess noch akzeptabel ist.

Es ist auch möglich, Streulichtsignal, Strahlablenkungssignal und Hellfeldsignal simultan zu verarbeiten. Hierdurch können strahlablenkende Fehler auf der Oberfläche erkannt und für die Qualitätsuntersuchung des Materials verworfen werden. Treten diese drei Signale in Koinzidenz auf, so bedeutet dies, dass ein aus dem Volumen stammender, strahlablenkender und strahlabsorbierender Fehler erfasst und größenmäßig erfasst werden kann. Der Umstand, dass dieser Fehler auch strahlablenkend ist, erlaubt eine weitergehende und verfeinerte Typisierung der Fehler wie oben angesprochen.

Die Bereitstellung der unterschiedlichen Farben für die beiden Teile der ersten Strahlungsquellen kann dadurch erfolgen, dass in beiden Teilen verschiedenfarbige LED's zugeordnet sind. Dieses Licht kann dann von einer CCD-Kamera detektiert werden.

Es ist möglich, das Streulicht einerseits und die abgelenkte Strahlung und/oder das Hellfeldsignal andererseits mit unterschiedlichen Detektoren zu erfassen.

Um den apparativen Aufwand gering zu halten ist es vorteilhaft, wenn beide Strahlungsquellen gepulst emittieren, so dass die erste Strahlungsquelle bevorzugt eine gepulste Strahlungsquelle ist. In Kombination mit einer gepulsten zweiten Strahlungsquelle, beispielsweise ein gepulst arbeitender Laser, kann dann sichergestellt werden, dass eine Strahlungsquelle ausschließlich in den Pulspausen der anderen Strahlungsquelle emittiert. Hierzu besitzt die Vorrichtung eine die beiden Strahlungsquellen steuernde Elektronik, die derart ausgebildet ist, dass die beiden Strahlungsquellen ausschließlich zeitversetzt Licht emittieren.

Wird, wie oben ausgeführt, eine zweigeteilte erste Strahlungsquelle gewählt, so entspricht dies dem Fall dreier Lichtquellen. Die eine Lichtquelle emittiert insofern in der gemeinsamen Pulspause der beiden anderen Lichtquellen.

Zur Verarbeitung der detektierten Signale ist ferner eine Auswerteeinheit zur Feststellung von Hellfeldsignal. Streulichtsignal und/oder Ablenkungssignal vorgesehen.

Nachfolgend soll die Erfindung anhand von eines Ausführungsbeispieles näher erläutert werden.

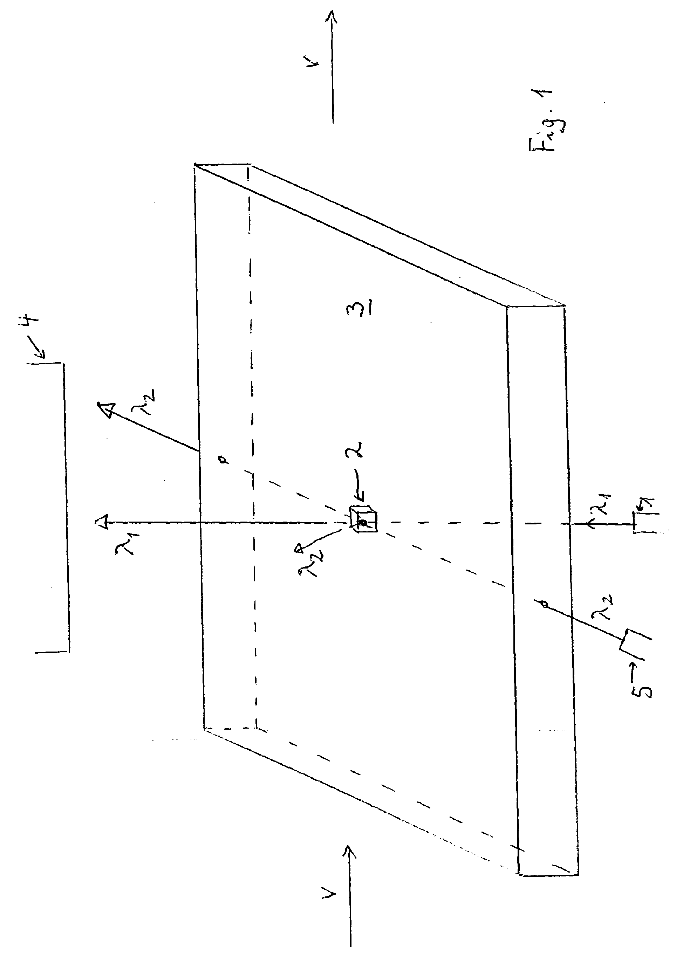

Fig. 1 zeigt in einer schematischen Darstellungsweise das erfindungsgemäße Verfahren, bei dem eine erste Strahlungsquelle 1 mit Wellenlänge λ, von unterhalb eines plattenförmigen Glaskörpers 3 einstrahlt. Nach dem zweimaligen Durchtritt des Lichts gelangt es in den Detektor 4. Die Strahlungsquelle erfasst hierbei im Inneren des Glasmaterials 3 ein Teilvolumen 2.

Zusätzlich wird das Glasteil 3 über die Seitenkante der Glasplatte 3 mittels der zweiten Strahlungsquelle 5 mit einem Licht der Wellenlänge $\lambda_2$ beaufschlagt. Das Licht der zweiten Strahlungsquelle wird hierbei am vorgegebenen Teilvolumen 2 teilweise gestreut, was durch den seitlich nach links gerichteten Pfeil angedeutet wird. Die Glasplatte 3 seitlich von links nach rechts mit der Geschwindigkeit v bewegt.

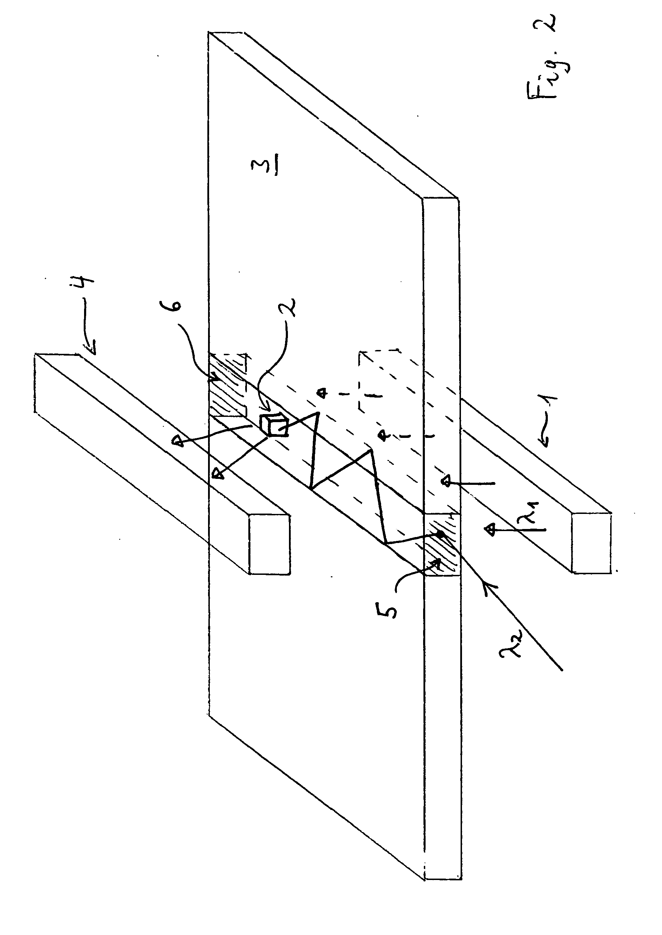

Fig. 2 zeigt erneut die Glasplatte 3, diesmal mit einer stabförmigen Lichtquelle 1, die senkrecht zur Unterseite der Platte Licht der Wellenlänge $\lambda_1$, emittiert. Zusätzlich gelangt Strahlung der Wellenlänge $\lambda_2$ in einen Bereich 5 der Seitenkante. Die Einkopplung erfolgt derart, dass Licht der Wellenlänge $\lambda_2$, im Inneren total reflektiert wird, was durch die Zickzack-Linie angedeutet wird. Das total reflektierte Licht wird hierbei am besagten Teilvolumen 2 partiell gestreut und gelangt in den Detektor 4. Der nicht gestreute Lichtanteil gelangt über die Fläche 6 am anderen Ende der Glasplatte 3 aus dem Glas heraus.

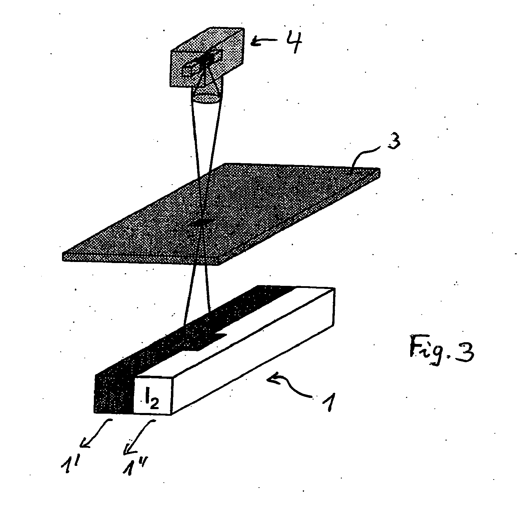

Fig. 3 zeigt eine zu Fig. 2 ähnliche Vorrichtung, bei der im Unterschied hierzu die Belichtungseinheit 1 zweigeteilt ist. Sie weist einen ersten Bereich 1' und einen zweiten Bereich 1" auf. Beide Bereiche haben rote LED's die abwechselnd Licht emittieren. Die CCD-Kamera 4 fokussiert auf das Teilvolumen im Glas 3. In Verlängerung dieser Richtung erfasst damit der Detektor 4 einen Teil der Oberfläche der taktweise Licht abstrahlenden Beleuchtungseinrichtung 1 an der Grenze zwischen den Bereichen 1' und 1 ".

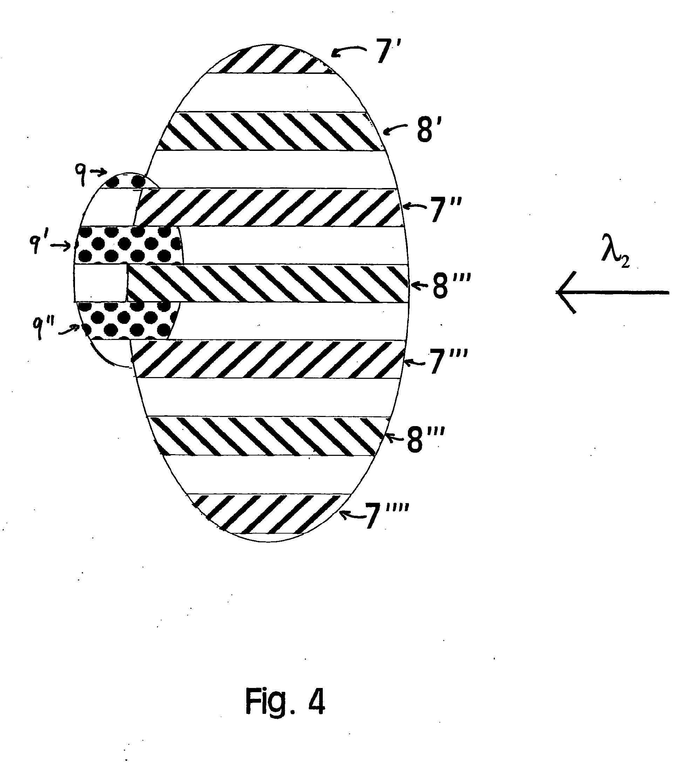

Fig. 4 zeigt in einer Prinzipdarstellung einen erkannten Fehler in Form einer Blase. Die große und in etwa eiförmige Struktur erhält man über Auswertungen der Absorption im Hellfeld. Der CCD-Chip detektiert alternierend hintereinander das Licht LED 1 und das Licht LED 2, nämlich 7', 8', 7", 8", 7"', 8"', 7"", 8"". LED 1 steht hierbei für das Licht des ersten Bereichs 1' der Belichtungseinrichtung 1, und LED 2 für das Licht des zweiten Bereichs 1".

Zusätzlich wurde seitlich von recht nach links Licht der Wellenlänge $\lambda_2$ über die Kante eingekoppelt. Dieses Kantenlicht durchdrang die Blase von rechts nach links und führte im strahlaustrittseitigen Bereich zur Streuung.

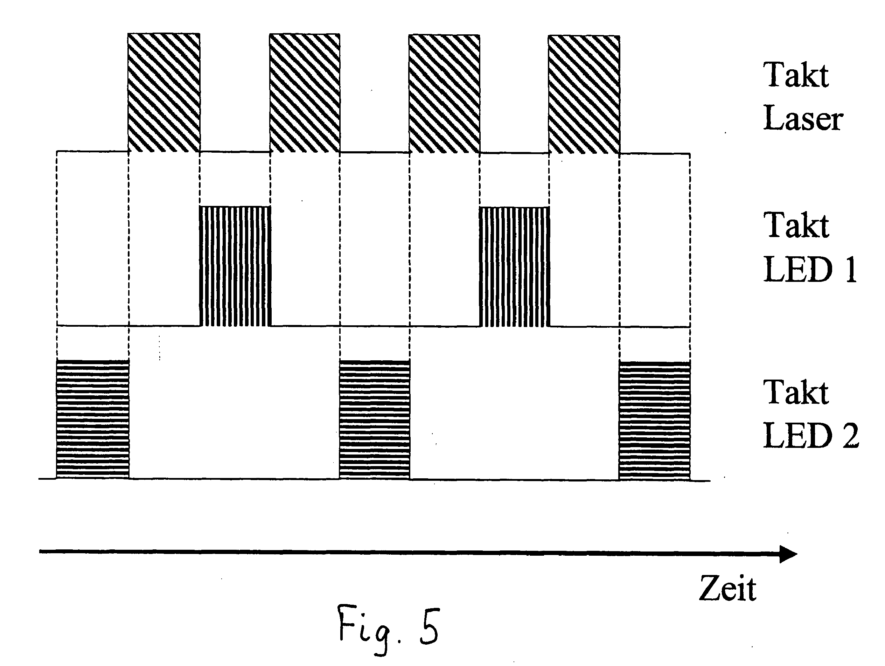

Der Lasertakt wurde hierbei an die Taktung der Bereiche 1' und 1" angepasst. Die vorgenommene Taktung ist durch Fig. 5 dargestellt. Abwechselnd hintereinander emittierte der erste Bereich 1', dann der zweite Bereich 1 ", und dann der Laser das jeweiliges Licht. Die eine Lichtquelle emittierte insofern jeweils in der gemeinsamen Pulspause der beiden anderen Lichtquellen. Der einzige Detektor erfasste im Streuungsbereich hintereinander Licht 9' des Lasers, Licht 7" von LED 1, Licht 9" des Lasers, Licht 8"' von LED 2, Licht 9" des Lasers und Licht 7"' von LED 1 usw.

**Patentansprüche**

1. Vorrichtung zur Erkennung von Fehlern in transparentem Material, mit einer ersten Strahlungsquelle (1) zur Beleuchtung eines definierten Teilvolumens (2) des transparenten Materials (3), mit einem Detektor (4) zur Erfassung des vom besagten Teilvolumens (2) herrührenden Lichts, und mit einer zweiten Strahlungsquelle (5), die derart zum Material (3) angeordnet ist, dass im besagten Teilvolumen (2) der zugehörige Lichtweg ausschließlich im Inneren des Materials (3) verläuft, **dadurch gekennzeichnet, dass** die erste Strahlungsquelle (1) aus zwei Teilen besteht, die mit unterschiedlicher Intensität oder Wellenlänge emittieren können.

2. Vorrichtung nach Anspruch 1, **dadurch gekenn-** **zeichnet, dass** den zwei Teilen der ersten Strahlungsquelle (1) verschiedenfarbige LED's zugeordnet sind.

3. Vorrichtung nach Anspruch 1 oder 2, **dadurch gekennzeichnet, dass** eine gepulst emittierende erste Strahlungsquelle (1) vorgesehen ist.

4. Vorrichtung nach einem der Ansprüche 1 bis 3, **dadurch gekennzeichnet, dass** der Detektor (4) zur Erfassung des Hellfeldes derart ausgerichtet ist, dass er Strahlung von beiden Teilen der ersten Strahlungsquelle (1) erfasst.

5. Vorrichtung nach einem der Ansprüche 1 bis 4, **dadurch gekennzeichnet, dass** eine im grünen Wellenlängenbereich emittierende Strahlungsquelle vorgesehen ist.

6. Vorrichtung nach einem der Ansprüche 1 bis 5, **dadurch gekennzeichnet, dass** die zweite Strahlungsquelle (5) ein Laser ist.

7. Vorrichtung nach Anspruch 6, **dadurch gekennzeichnet, dass** die Emissionsfrequenz des Lasers 532 nm ist.

8. Vorrichtung nach einem der Ansprüche 5 bis 7, **dadurch gekennzeichnet, dass** ein gepulster Laser vorgesehen ist.

9. Vorrichtung nach einem der Ansprüche 1 bis 8, **dadurch gekennzeichnet, dass** eine die beiden Strahlungsquellen (1, 5) steuernde Elektronik vorgesehen ist, die derart ausgebildet ist, dass die Strahlungsquellen ausschließlich zeitversetzt Licht emittieren.

10. Vorrichtung nach einem der Ansprüche 1 bis 9, **dadurch gekennzeichnet, dass** ein einziger Detektor (4) zur Erfassung von Hellfeldsignal, Streulichtsignal oder Ablenkungssignal vorgesehen ist.

11. Vorrichtung nach einem der Ansprüche 1 bis 10, **dadurch gekennzeichnet, dass** als Detektor (4) eine CCD-Kamera vorgesehen ist.

Fig. 1

EP 2 278 304 A1

Fig. 2

Fig.3

Fig. 4

Takt
Laser

Takt
LED 1

Takt
LED 2

Zeit

Fig. 5

EP 2 278 304 A1

Europäisches
Patentamt

European
Patent Office

Office européen
des brevets

## EUROPÄISCHER RECHERCHENBERICHT

**Nummer der Anmeldung**

EP 10 18 7717

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | JP 08 261953 A (FUJI PHOTO FILM CO LTD) 11. Oktober 1996 (1996-10-11) * Zusammenfassung; Abbildungen 1-5 * | 1-11 | INV. G01N21/89 G01B11/30 G01N21/896 |
| Y | WO 99/49303 A1 (LASER SORTER GMBH [DE]; HAUBOLD WOLFGANG [DE]; DROSTE JOSEF [DE]; PANE) 30. September 1999 (1999-09-30) * Seite 1, Zeile 17 - Seite 6, Zeile 15; Abbildungen 1-4 * | 1-11 | |
| A | WO 98/17993 A2 (INNOMESS GES FUER MESSTECHNIK [DE]; PINGEL ULRICH [DE]; NIEPEL CHRISTI) 30. April 1998 (1998-04-30) * Seite 3, Zeile 24 - Seite 4, Zeile 28; Abbildungen 1-3 * | 1-11 | |
| A | US 4 401 893 A (DEHUYSSER ANDRE [BE]) 30. August 1983 (1983-08-30) * Spalte 4, Zeile 39 - Zeile 53; Abbildung 4 * | 1-11 | |
| A | JP 2000 074848 A (HOYA CORP) 14. März 2000 (2000-03-14) * Zusammenfassung; Abbildungen 1-4 * | 1-11 | RECHERCHIERTE SACHGEBIETE (IPC) G01N G01B |
| A | WO 03/005007 A1 (NIPPON SHEET GLASS CO LTD [JP]; MAEZONO SHINJI [JP]; KANKI SATOSHI [JP]) 16. Januar 2003 (2003-01-16) * Zusammenfassung; Abbildung 1 * | 1-11 | |

Der vorliegende Recherchenbericht wurde für alle Patentansprüche erstellt

| Recherchenort | Abschlußdatum der Recherche | Prüfer |
|---|---|---|
| München | 6. Dezember 2010 | Consalvo, Daniela |

## ANHANG ZUM EUROPÄISCHEN RECHERCHENBERICHT
### ÜBER DIE EUROPÄISCHE PATENTANMELDUNG NR.

EP 10 18 7717

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-12-2010

| Im Recherchenbericht angeführtes Patentdokument | | Datum der Veröffentlichung | Mitglied(er) der Patentfamilie | | Datum der Veröffentlichung |
|---|---|---|---|---|---|
| JP 8261953 | A | 11-10-1996 | JP | 3036733 B2 | 24-04-2000 |
| WO 9949303 | A1 | 30-09-1999 | DE | 19813072 A1 | 30-09-1999 |
| | | | EP | 1066508 A1 | 10-01-2001 |
| | | | ES | 2253884 T3 | 01-06-2006 |
| | | | JP | 4177556 B2 | 05-11-2008 |
| | | | JP | 2002524718 T | 06-08-2002 |
| | | | US | 6275286 B1 | 14-08-2001 |
| WO 9817993 | A2 | 30-04-1998 | AT | 265042 T | 15-05-2004 |
| | | | AT | 241806 T | 15-06-2003 |
| | | | DE | 19643017 C1 | 23-04-1998 |
| | | | EP | 0932826 A2 | 04-08-1999 |
| | | | ES | 2219615 T3 | 01-12-2004 |
| | | | ES | 2200215 T3 | 01-03-2004 |
| | | | JP | 4065028 B2 | 19-03-2008 |
| | | | JP | 2001502799 T | 27-02-2001 |
| | | | JP | 4392619 B2 | 06-01-2010 |
| | | | JP | 2007309949 A | 29-11-2007 |
| | | | KR | 20000049236 A | 25-07-2000 |
| US 4401893 | A | 30-08-1983 | EP | 0071202 A1 | 09-02-1983 |
| JP 2000074848 | A | 14-03-2000 | JP | 3673649 B2 | 20-07-2005 |
| WO 03005007 | A1 | 16-01-2003 | CN | 1520512 A | 11-08-2004 |
| | | | JP | 4132046 B2 | 13-08-2008 |
| | | | US | 2004179193 A1 | 16-09-2004 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9949303 A
- JP H10339795 B

- DE 10221945